# EUROPEAN PATENT APPLICATION

(11) **EP 3 061 734 A1**
(43) Date of publication of application: **31.08.2016**
(21) Application number: 13896123.0
(22) Date of filing: 21.10.2013
(51) Int. Cl.: C04B 24/04, C04B 24/14

(54) **LIGHTWEIGHT CONCRETES AND MORTARS**

(71) Applicant: Envirocem, S.L., 28002 Madrid (ES)
(72) Inventor: BURGOS ENRIQUEZ, Enrique, E-28002 Madrid (ES)
(74) Representative: Urizar Anasagasti, Jesus Maria
(86) International application number: PCT/ES2013/070727
(87) International publication number: WO 2015/059315

(57) **Abstract**

Lightweight mortar and concrete which comprises a hydraulic conglomerate which includes pure Portland clinker, gypsum and common glass in different proportions, mixed together in a micronized manner until a mechanical alloy of the elements is achieved and light aggregates with a grain size and proportion dependent on the resulting product being mortar or concrete with low density, fundamentally cellular glass or arlite, pearlite, vermiculite, slag, expanded polyethylene and/or glass sands of ground glass and/or silica or limestone sands and/or granulated plastic sands.

## Description

### Object of the invention

The object of the present invention is to obtain a hydraulic conglomerate mixture of glass cement and light aggregates of foam glass and/or other organic and inorganic elements, occluded air and foaming agents in order to obtain lightweight concretes and/or mortars and with outstanding properties, always with the aim of these mixtures having an ecological nature, with the use of waste materials in order to thus include them in the recycling chain.

### Background of the invention

The development of lightweight concretes with Portland cement, either with occluded air, foaming agents or including organic and inorganic elements and even cellular glass is well known and there are numerous studies and patents which develop them, the prejudicial effect produced between glass and Portland cement is also known, reference is made to the alkali-silica reaction. However, different actors have tested the suppression of this reaction, there are even patents (USA 6616752) which minimize it using other methods.

After testing in the laboratory, the effect which our agglomerate based on micronized glass exerts on cellular glass and to verify that the alkali-silica reaction is not produced (alkaline reactivity according to UNE 146508:1999EX), tests and constructive methods continue being carried out to make the practical application and marketing thereof possible. In addition, the use of other organic and inorganic elements, foaming agents or air, used in the industry of lightweight concretes and mortars is considered in this invention.

The hydraulic agglomerate obtained according to the production method and claims of the patent ES 2339910B1 with the different proportions and applications thereof according to percentages is always used as the hydraulic agglomerate in the present invention. The present invention suggests the development of the previously cited document, the same inventor also being the one who carried it out, as a system for obtaining more or less lightweight concretes and mortars with a mixture of hydraulic agglomerate based on glass powder with Portland clinker, gypsum and alumina, in different proportions, micronized and alloyed according to the production method, including cellular glass in different grain sizes, as well as other materials, with low density and coming from industry and consumer waste.

This invention combines the two previously cited technologies, that of cellular glass and other materials and that of the agglomerate based on micronized powder glass in order to achieve a new type of lightweight mortar/concrete, very stable to the reaction with the alkalis of cement since the micronized glass of the compound is converted into an inhibitor of the alkali aggregate reaction.

At the same time, in determined cases, the inclusion in the conglomerate of synthetic fibers and plastic strips, extracted from domestic plastic bags (low-density polyethylene) is considered in order to increase the ecological and environmental significance of the invention, whilst the internal consistency, the strength and the figuration control are increased, although the strongly pozzolanic nature of the micronized glass at values below 28-30 microns, shows, as was demonstrated in the preceding patent, a very notable reduction in the hydration heat, therefore in the figuration.

Based on the inhibition of the alkali-silica reaction, another addition which seems very interesting and which has been studied and rejected in many cases for the inclusion together with Portland cement, is substituting part of the fines with soda-lime glass sands or another type especially recycled waste glass from the screens of CRT televisions and computers. Sands which are being produced in many countries to provide a solution to these waste products of glass which are not recycled in the quantity in which they are produced and which generally ended up in the landfill. The inclusion of plastic granulates as fine elements has also been considered.

Other related patent documents:
WO2003097553A1 (Norsk Glassgjenvinning Como). Lightweight concrete.
DE102006017199B3 (Oliver Maybohm). A method for producing covering panels for interiors which includes a cement mixture and glass pearls.
EP0292424A2 (Misag Ag). Process and apparatus for producing expanded articles.
EP0906816A1 (Dennert Poraver GmbH). Process for making industrially prefabricated wall elements
US6616752 (Misapor Ag). Lightweight concrete.
US7150843 (Dennert Poraver Gmbh). Process for the production of a shaped article from a lightweight-aggregate granulate and a binder.
US20080156038 (Dennert Poraver Gmbh). Process for preparing foamed glass granulate.
US20080299413 (Brown Martin W). Acoustical gypsum board panel which includes calcium sulfate dehydrate crystals and expanded pearlite.
US20090012191 (Scott, Decanos). A method for manufacturing a light cement capable of replacing conventional gypsum boards.

### Description of the invention

The present invention relates to a cementitious agglomerate mixture obtained by means of dry mechanical alloying of the components thereof, formed by glass, Portland clinker (grey or white), gypsum, alumina and this entire complex of jointly alloyed materials and lastly mixed with water, which allows, by way of this proposed mixture with variability of the elements forming it, in proportions suited to each constructive use and with the partial or total substitution of the siliceous or limestone aggregates commonly used in the manufacturing of mortars and concretes for others with low density and thus obtain pieces, panel, coverings or lightweight concrete and/or mortar structures and with applications in the field of construction with the following properties and advantages, amongst others:
- lighten dead loads in the structures
- divisions by means of partitions in all types of buildings
- levelling layers in floors or slabs
- protection of structures against fire
- acoustic and thermal protection
- protection against ionic and nuclear radiation
- use of waste materials
- use as decorative material, by color dying

### Description of the possible components

Cellular glass, which will be explained as it is the most novel element, also sometimes called expanded glass, is a construction element which emerged relatively recently, created from baked glass powder. It is fundamentally used as a thermal isolate or as protection against fire and also in false ceiling of very humid places or places with the need to maintain good asepsis conditions. The material is obtained after fusing glass powder, normally coming from recycled white glass or a mixture of colors. By means of thermochemical processes, the glass powder is fluffed, creating bubbles in a partial vacuum, thereby obtaining a material with very low thermal conductivity (around 0.048 W/m°C). The paste resulting after the baking process is obtained with pieces with different bulk dimensions or in panels which are cut into commercial pieces, the dimensions of which, depending on the use thereof, vary between 30 - 50 cm in width by 50 - 100 cm in length, with piece thicknesses of 1.3 to 4 cm.

The material is similar in aspect and weight to volcanic pumice stone, but with a more porous texture. The cellular glass panels are rigid and very light: the normal density for thermal isolation panels is 157 - 170 kg/m³, while that used as a false ceiling, being more resistant, has a density of 450 kg/m³. Due to the fact that the bubbles or cells which the material encloses are not connected to each other, the material is impermeable to water and to water vapor and is a very good thermal isolate. It is also non-flammable and provides strong resistance to fire. Another characteristic of cellular glass is that, since it is a material exclusively formed by glass, it is aseptic and rot-proof; the reason for which it is used in false ceilings of laboratories, hospitals or health centers.

The main problem of panels or elements manufactured from concrete with Portland cement which includes cellular glass as a substitution for stone, lies in the alkalis since they are usually present in cements and some types of gypsum, consequently the compatibility thereof with cellular or expanded glass (especially mortars and concretes), it must be conveniently treated. The manufacturing method of cellular glass is clearly stated in the following patents EP 0292424 and US 6752661.

Other light materials: pumice stone, phenolic resins, diatomaceous slates, natural fibers, plant residues, volcanic glass, vermiculites, pearlites and arlite and other low-density materials are suitable for preparing lightweight concretes and mortars with our hydraulic conglomerate, seeking different constructive applications and uses using different proportions of glass in the cementitious mixture.

In order to achieve a stable and resistant mixture, different quantities of cellular glass by volume have been tested, as well as different percentages of glass/clinker and water/cement ratio, plus gypsum, plus alumina. Even with the complete or partial introduction of siliceous or limestone natural fines, the ground glass itself, which they completely or partially substitute, into the fines produced in the grinding of the cellular glass, at the same time varying the grain sizes of the cellular glass. This component mixture has a large quantity of glass since if the foam glass, the micronized glass and the possible glass supplied as sand are added up, an agglomerate with a notable quantity of recycled glass is obtained, but at the same time the inclusion in the concrete of a large quantity of SiO2 in amorphous state.

The aggregates or fine elements, natural sands, silicas or limestones or glass sands or plastic granulate, in the possible use thereof as a substitution for the fines resulting from the grinding of cellular glass, have a granulometric curve equal or very close to the following:

| U.S standard sieve | Mesh size (mm) | Percentage by weight which passes through |
|---|---|---|
| No. 3/8" | 9.52 | 100 |
| No. 4 | 4.75 | 95 - 100 |
| No. 8 | 2.36 | 80 - 100 |
| No. 16 | 1.18 | 50 - 85 |
| No. 30 | 0.60 | 25 - 60 |
| No. 50 | 0.30 | 10 - 30 |
| No. 100 | 0.15 | 2 - 10 |

The use of the multiple additives to Portland cement, in its full extent, and selectively used by our invention is not excluded. In all cases and considering a maximum of 90% of glass and a minimum of 10%, corresponding to 100% of clinker plus gypsum, plus alumina or other additives.

The average compressive strength of foam glass is in the order of 6 M/mm2. The mechanical strengths according to regulations UNE 2002 of our conglomerates according to percentages of glass/clinker plus gypsum plus alumina are the following with the equivalent thereof to different types of cement according to the strengths obtained.

### MECHANICAL STRENGTHS ACCORDING TO UNE 2002 REGULATIONS

**TABLE No. 1**

| References | Regulations | Cements | Strength classes | Different types of cement according to percentage | | | | | | | Testing regulations |
|---|---|---|---|---|---|---|---|---|---|---|---|
| | | | | Glass Clinker + gypsum | | | | | | | |
| | | | | 80/20 | 70/30 | 60/40 | 50/50 | 40/60 | 30/70 | 20/80 | |
| 1 | UNE-EN 197-1: | | 32.5 N | | | x | x | x | x | x | UNE-EN 196-1 |
| | 2000 | | 32.5 R | | | | | x | x | x | |
| | UNE 80303-1: 2001 | All | 42.5 N | | | | | | x | x | |
| | UNE 80303 2: 2001 | | 42.5 R | | | | | | x | x | |
| | UNE 80303-3: 2001 | | 52.5 N | | | | | | | x | |
| | | | 52.5 R | | | | | | | x | |
| 2 | UNE 80305: 2001 | BI. 22.5 X | 22.5 N | | | X | | | | | As 6 UNE EN As 1 80117: 2001 |
| | | The remainder | As 1 | | | | | | | | |
| 3 | UNE 80307: 2001 | ESP VI-1 | 22.5 N | | | | | | | | UNE EN 196-1 |
| | | | 32.5 N | | | | | | | | |
| | | | 42.5 N | | | | | | | | |
| 4 | UNE 80309: 1994 | CNR 4 CNR 8 CNR 8 | 4 | | | | | | | | UNE 80116 |
| | | | 8 | | | | | | | | |
| | | | 8 | | | | | | | | |
| 5 | UNE 80310: 1996 | CAC/R | ... | | | | | | | | UNE-EN 196-1 |
| 6 | ENV 413-1: 1994 UNE-ENV 413-1: 1995 | MC 5 MC 12.5 MC 12.5 X MC 22.5 | 5 | X | X | | | | | | UNE-EN 195-1 |
| | | | 12.5 | X | X | | | | | | |
| | | | 12.5 | X | X | | | | | | |
| | | | 22.5 | | | | | | | | |

Based on the observation of the preceding Table No. 1, the following percentages can be used, amongst others, for this application:
Micronized glass/clinker + gypsum + alumina (or the most resistant equivalent cement thereof, CEM I 52.5 - 42.5 - 32.5 R or S (according to the UNE regulations included in Table No. 1) plus the alumina portion thereof) mechanically alloyed and with grain size of 0.1 to 28 microns, preferably of 0.1 to 10 microns. An intimate mixture of the components can also be carried out, previously ground separately or in groups, to the stipulated grain sizes, although the strengths decrease with respect to manufacturing by means of simultaneous mechanical alloying of all the components, however, in no case is this technique rejected due to being an effective tool and having greater commercial simplicity for achieving the different components in an isolated manner.

Percentages of glass/clinker + gypsum + optionally alumina:
90/10 80/20 70/30 60/40 50/50 40/60 30/70 20/80 10/90

As can be observed, with all the intervals which go from 90/10 to 10/90, the possibilities are multiples as well as the strengths which can be obtained, which are exempt from the addition of natural or artificial aluminas, silica fume, in different percentages in order to achieve greater initial strengths or other activators (meta calcined kaolin. Silica fume, etc.).

Another very novel activator which is desired to be added to this invention is super fine glass with grain sizes of 0.1 to 0.5 microns, extracted from the sleeve filters in the micronizing of glass in alumina ball mills or other mills, although it could be achieved by regulating the dynamic separator or creating a parallel circuit with a specific dynamic separator, of super fine particles and modifying the size of the balls of these mills, they can also be obtained in specific horizontal or vertical mills of an infinite number of models and brands present on the market.

This activator has a minimum of SiO2 of 65% and is in amorphous state, therefore to a certain extent it can be accepted as the so-called "silica fume". It can be added to the concrete in percentages greater than the silica fume of the order to 20 - 30% in order to fulfil a very similar task.

Although the range of possibilities is very broad, when varying the components of the glass in the cementitious complex as a percentage, in this test, the percentage 33/67 was selected, which includes the entire production method including the alumina, since in the pozzolanicity tests carried out, it continues maintaining the pozzolanicity nature after 365 days (Table No. 3) and even with a glass percentage of only 33% of the mixture. And furthermore the strengths, both to compressive and to bending, are most notable, as can be proven in Table No. 2

### MECHANICAL STRENGTHS ACCORDING TO UNE-EN 196-1:1996

**TABLE No. 2**

| BENDING STRENGTH | | | | | COMPRESSIVE STRENGTH | | | |
|---|---|---|---|---|---|---|---|---|
| Test sample | Breaking stress (MPa) | | | | Test sample | Breaking stress (MPa) | | |
| | 7 days | 28 days | 90 days | | | 7 days | 28 days | 90 days |
| A | 7.0 | 8.2 | 8.9 | | A-1 | 37.7 | 49.7 | 63.5 |
| | | | | | A-2 | 36.7 | 51.5 | 62.0 |
| B | 6.3 | 8.5 | 8.8 | | B-1 | 35.8 | 52.6 | 60.4 |
| | | | | | B-2 | 36.0 | 52.9 | 59.4 |
| C | 6.9 | 8.3 | 8.9 | | C-1 | 36.0 | 52.1 | 64.4 |
| | | | | | C-2 | 35.5 | 49.9 | 65.7 |
| **Average value** | **6.8** | **8.3** | **8.9** | | **Average value** | **36.3** | **51.4** | **62.6** |
| Tests of this material, (33/67) mechanical strengths according to UNE 196-1: 1996 | | | | | | | | |

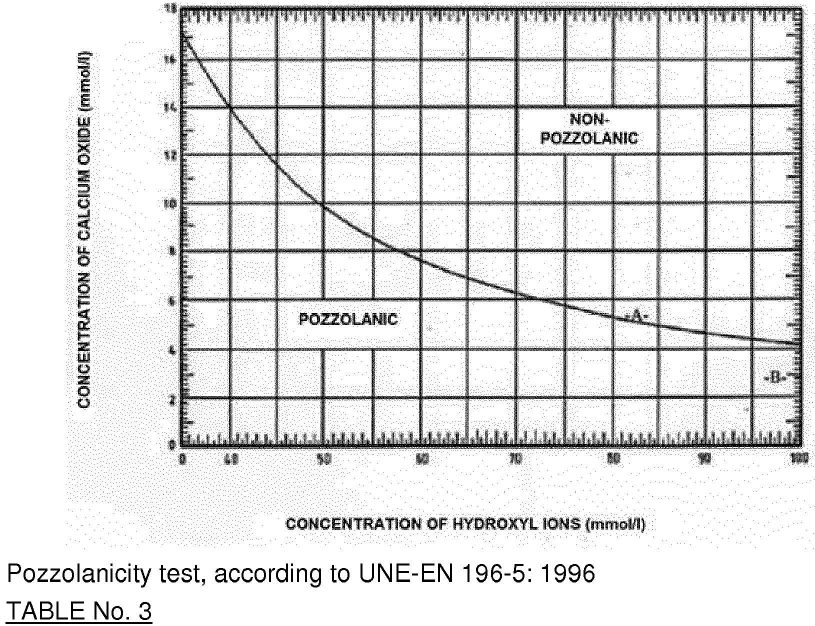

The pozzolanic nature can be observed and the progression of the strength increase which, although only up to 90 days is captured in this test, continues increasing to more than 365 days, this property is very positive for this application since:
- it increases the mechanical properties in the medium and long term
- it increases the resistance to sulfates
- it notably increases the resistance to the alkali-silica reaction
- it increases the impermeability
- it decreases corrosion of the rebar, with a very alkaline pH greater than 12
- it reduces the hydration heat
- it has high malleability

With the characteristics of the agglomerate material in one of the possible intervals known, a possible grain size of the foam glass is going to be determined, circular granulates or pieces of different sizes can be used, as obtained from the different manufacturing methods.

In order to achieve the grain size, the foam glass is ground with a drum mill with spikes for subsequently sieving and weighing the different grain sizes and obtaining the desired grain size curve(s). It is determined (according to Table No. 2) that with equal binder, the quantity and grain sizes of the foam glass are going to determine the pressure and bending strength characteristics thereof, specific weight, thermal conductivity, resistance to fire, soundproofing etc., thus it can be selected as a function of the specific application of the desired light mortar or concrete.

The possible mixtures of the glass cement with foam glass provides the compound with lightness and strengths in the medium and long term, closed porosity, high resistance to chemical products, thermal isolation, very malleable mixtures, ease of pumpability and various uses.

Any light or traditional concrete structure can be implemented with foam glass and glass cement plus the additives thereof with adjustments to the components (glass: quantity and grain size, clinker or cement: type or quantity, gypsum: quantity and grain size, alumina: type, quantity and grain size, fibers: organic and inorganic, natural and light aggregates, natural and artificial aggregates, water: quantity), and with previous tests.

### Reference test

Firstly, the foam glass used is characterized as follows:

| | |
|---|---|
| - Density | 170 kg/m³ |
| - Compressive strength | 7 N/mm² |

- Grain size composition of the foam glass. In this exemplary case, the following grain size composition has been selected: taking into account the Fuller curves and forcing some positions:
   ∘ 0-1 mm... 150 kg/m³ of foam glass... corresponding to 30% of the fraction
   ∘ 1-4 mm... 100 kg/m³ of foam glass... corresponding to 20% of the fraction
   ∘ 4-16 mm... 250 kg/m³ of foam glass... corresponding to 50% of the fraction
   Components and quantities of the mixture
- 455 kg/m³ of cement CEM 52.5 R
- 135 kg/m³ of micronized glass at 14 microns grain size
- 25 kg/m³ of ultra-fine glass at 0.5 microns grain size
- 2.5 kg/m³ of foamed additive
- 260 liters/m³ of water
- 0.9 kg/m³ of synthetic fibers
- 500 kg/m³ of foam glass of different grain sizes

All the material except the foam glass has been intimately mixed in a concrete plant provided with a mixer, the foam glass is subsequently added to it and is subjected to vibrating, carrying out three sets of test samples in order to obtain mean valves.

Mean results obtained with three sets of test samples in the tests:
Tests carried out

### MECHANICAL STRENGTHS ACCORDING TO UNE 196-1: 1996

| | | |
|---|---|---|
| Days | 28 | 90 |
| Compressive strength | 32 N/mm² | 38 N/mm² |
| Bending strength | 4.6 N/mm² | 5.4 N/mm² |

| | |
|---|---|
| Thermal conductivity | 0.39 W/m.K |
| Dynamic module | 8,700 N/mm² |
| Dry weight | 1230 Kg/m³ |

Using these values obtained and taking into account the grain size curve used and with the possible use of other proportions of the mentioned elements present in the mixture, including with other additives, a very extensive variability of different products and applications specific to the world of construction is produced.

In this specific case, the concrete has a density apparently lower than 1.35 T/m³ which has a compressive strength 4 to 6 times that of a light aggregate concrete, at the same time with strengths which continue growing from 28 days and for more than one year and an insulating property against cold/heat between 20 and 40% greater than light aggregate concrete.

These qualities are enhanced by the use of a conglomerate based on fine and ultra-fine glass with a pH greater than 12 and with the inputs and properties previously listed.

Once the nature of the invention has been sufficiently described, as well as an unpreferred exemplary embodiment, even though it is significant for the qualities thereof, it is stated for the appropriate purposes that the materials, form, size and arrangement of the elements described could be modified, provided this does not involve an alteration of the essential characteristics of the invention which is claimed below.

## Claims

1. A lightweight mortar and concrete which comprises a hydraulic conglomerate and light aggregates with grain size and proportion dependent on whether the resulting product is mortar or concrete, **characterized in that**:
1) the conglomerate which becomes part of the same comprises:
a. Pure Portland clinker, gypsum and common glass (mixture of colors or transparent glass) in different proportions, these basic components being mixed together in a micronized manner until a mechanical alloy of the elements is achieved and the optional addition of powder of: alumina, silica fume and/or ultra-fine glass; or
b. Portland cements with the strengths: CEM I 52.5 - 42.5 - 32.5 N or R, white and grey, intimately mixed with common glass (mixture of colors or transparent glass) and this mixture of basic components in different proportions, micronized together until a mechanical alloy of the elements is achieved and the optional addition of powder of: alumina or silica fume and/or ultra-fine glass;
2) the aggregates include:
a. Low-density aggregates, natural or artificial, fundamentally cellular glass or: arlite, pearlite, vermiculite, slag, expanded polyethylene and other light aggregates, with occluded air and/or an air-entraining agent; and/or
b. Ground glass sands and/or siliceous or limestone sands and/or granulated plastic sands.

2. The lightweight mortar and concrete according to claim 1, **characterized in that** the Portland clinker type composition used is the following:
- SC3 tricalcium silicate 40-50%
- SC2 bicalcium silicate 20-30%
- AC3 tricalcium aluminate 10-15%
- AFE4 tetracalcium aluminoferrite 5-10%
and for the white Portland clinker the percentage of ferrite oxide (Fe2O3) in a proportion lower than 0.4%.

3. The lightweight mortar and concrete according to claim 1, **characterized in that** the input of the basic agglomerate components includes a minimum of 10% of glass, a maximum of 90% and complementarily a maximum of 90% of clinker, gypsum and alumina or Portland cements with the strengths CEM I 52.5 - 42.5 - 32.5 N or R and alumina, at a minimum of 10% of glass.

4. The lightweight mortar and concrete according to claim 1, **characterized in that** the components of the agglomerate include the following: synthetic fibers and/or additives: plasticizers, stabilizers, super plasticizers, activators and waterproofing products.

5. The lightweight mortar and concrete according to claim 1, **characterized in that** the glass introduced into the agglomerate may optionally be: common glass, soda-lime, domestic or industrial, or another glass, the quantity of lead thereof present in the composition thereof not exceeding 5%.

6. The lightweight mortar and concrete according to claim 1, **characterized in that** the basic components introduced into the agglomerate are mechanically alloyed until a final grain size is achieved between 0.1 microns and 30 microns, preferably between 15 - 20 microns and optimally between 0.1 - 10 microns.

7. The lightweight mortar and concrete according to claim 1, **characterized in that**, optionally and in an individual or combined manner, it includes the following additives:
a) Alumina in a proportion not greater than 5% of the weight of the Portland clinker present in the conglomerate, preferably in the form of sodium aluminate;
b) Silica fume in a proportion not greater than 5% of the weight of the Portland clinker present in the agglomerate and an average grain size of 0.1 microns.
c) Ultra-fine glass with a grain size not greater than 0.5 microns and in percentages not greater than 20% of the Portland clinker present in the conglomerate.
d) Ultra-fine glass with a grain size not greater than 0.5 microns, used in 100% as a single glass additive of the mixture.

8. The lightweight mortar and concrete according to claim 4, **characterized in that** the synthetic fibers, micro or macro, introduced into the hydraulic agglomerate with the light aggregate become part, for the light concrete, in doses of up to 0.5 to 0.9 kg/m³ and for the lightweight mortar of up to 1.5 to 2 kg/m³.

9. The lightweight mortar and concrete according to claim 1, **characterized in that** the low-density aggregate incorporated into the agglomerate is cellular glass with a density between 180 and 225 kg/m³.

10. The lightweight mortar and concrete according to claim 1, **characterized in that** the low-density aggregate incorporated into the agglomerate is cellular glass with a density between 400 to 450 kg/m³.

11. The lightweight mortar and concrete according to claims 8 or 9, **characterized in that** the cellular glass constitutes at least 30% of the total of aggregate incorporated.

12. The lightweight mortar and concrete according to claims 8 or 9, **characterized in that** the cellular glass is ground in order to obtain angular surfaces and different grain sizes of 0 - 50 mm or more, sieved at different sizes for the composition of the grain size curve(s).

13. The lightweight mortar and concrete according to claim 1, **characterized in that** the aggregates or fine elements, natural sands, silicas or limestones or glass sands or granulated plastic, in the possible use thereof as a substitution for the fines resulting from the grinding of the cellular glass, have a grain size curve equal or very close to the following:
| U.S. Standard sieve | Mesh size (mm) | Percentage by weight which passes through |
|---|---|---|
| No. 3/8" | 9.52 | 100 |
| No. 4 | 4.75 | 95 - 100 |
| No. 8 | 2.36 | 80 - 100 |
| No. 16 | 1.18 | 50 - 85 |
| No. 30 | 0.60 | 25 - 60 |
| No. 50 | 0.30 | 10 - 30 |
| No. 100 | 0.15 | 2 - 10 |

14. The lightweight mortar and concrete according to claim 1, **characterized in that** the cellular glass used in the mixtures has a compressive strength greater than 3 N/mm².

15. The lightweight mortar and concrete according to claim 1, **characterized in that** the compressive strength of the resulting constructive elements with light aggregates is greater than 8 N/mm².

16. The lightweight mortar and concrete according to claim 1, **characterized in that** the resulting thermal conductivity of the constructive elements implemented, of the concretes and mortars applied, is lower than 0.50 W/m.K.

17. The lightweight mortar and concrete according to claim 1, **characterized in that** in order to obtain the agglomerate, the cements with strengths of CEM I 52.5 - 42.5 - 32.5 N or R are optionally mixed in all the proportions, white or grey, together with the micronized glass and/or ultra-micronized glass.
